# EUROPEAN PATENT APPLICATION

(11) **EP 0 982 921 A1**
(43) Date of publication of application: **01.03.2000**
(21) Application number: 99306472.4
(22) Date of filing: 17.08.1999
(51) Int. Cl.: H04M 3/56, H04M 7/00

(54) **Technique for effective distribution of audio signals in a teleconference**

(30) Priority: 28.08.1998 US 141954
(71) Applicant: LUCENT TECHNOLOGIES INC., Murray Hill, New Jersey 07974-0636 (US)
(72) Inventor: Aravamudan, Murali, New Jersey 07974 (US); Iyer, Prakash, Freehold, New Jersey 07728 (US)
(74) Representative: Johnston, Kenneth Graham

(57) **Abstract**

In a teleconference, audio communications between attendees which may be located at different locations are processed by a mixer. Audio signals, representative of sound effects including utterances by the attendees, are transmitted to the mixer respectively. The mixer derives samples from the respective received signals. During each sample interval, the mixer selects the sample having the highest energy to become a mixed sample output for each user, except the user contributing the highest energy sample. For such a user, the mixer selects the sample having the next highest energy to become the mixed sample output. The mixed sample outputs are transmitted back to the users respectively, thereby realizing the audio communications in the teleconference.

## Description

### Field of the Invention

The invention relates to communications systems and methods, and more particularly to systems and methods for mixing audio signals in a teleconference involving audio communications.

### Background of the Invention

Teleconferencing, e.g., audioconferencing or videoconferencing, has become a vital part of everyday business. With teleconferencing, a meeting where attendees from different locations participate via telecommunication facilities can be readily scheduled and held. Thus, the major benefits of teleconferencing include reducing the attendees' travel time and costs, and increasing their productivity.

Audio communications constitute a principal part of a teleconference. Attendees in the teleconference typically can audio-communicate in a full duplex manner or, in other words, can talk freely and simultaneously to exchange information with one another. In prior art, audio signals representing sound effects including utterances by the attendees are transmitted through a communication network to a mixer, where samples of the audio signals are derived and processed. During each sample interval, based on the audio signal samples attributed to different attendees, the mixer computes for each attendee a mixed sample representative of the aggregate result of the sound effects by other attendees, in accordance with an averaging function. For example, the resulting mixed sample transmitted back to each attendee may represent a weighted average of the audio signal samples attributed to the other attendees, where the weight for each audio signal sample increases with the audio signal sample value. In general, by using the averaging function, the mixed sample for each attendee includes representations of all of the sound effects by other attendees in the teleconference.

In computing the mixed sample using the aforementioned averaging function, the prior art mixer in effect mixes energies of the audio signal samples attributed to different attendees. However, such an averaging function calls for multiplicative operations, the number of which increases with the number of attendees. Because of these multiplicative operations, the computation required of the mixer is highly intensive for a typical teleconference. As such, a specialized digital signal processor (DSP) is usually employed in the mixer to handle such a highly intensive computation. Nonetheless, the specialized DSP also contributes to the undesirably high cost of the mixer. In addition, the prior art mixer can only accommodate a very limited number of attendees as not to overburden the DSP.

### Summary of the Invention

We have recognized that typical human auditory faculties cannot distinguish the effect of successive mixed samples each resulting from mixing energies of audio samples attributed to different speakers during the corresponding sample interval, as in the prior art, from that of successive mixed samples each comprising the audio sample attributed to the loudest speaker during the corresponding sample interval, provided that the sample interval is sufficiently short.

Thus, in accordance with the invention, during each sample interval, a first audio sample having the highest energy level attributed to the loudest speaker is identified. A first mixed sample signal representing the first audio sample is provided to all of the attendees in the teleconference, other than the loudest speaker to prevent him/her from hearing an otherwise, undesirable echo of his/her own sound effect. For the loudest speaker in the sample interval, a second audio sample having the next highest energy level attributed to the next loudest speaker is identified. A second mixed sample signal representing the second audio sample is provided to the loudest speaker, thereby realizing the audio communications in the teleconference.

In providing the first and second mixed sample signals, the mixer in accordance with the invention needs to carry out simple comparative operations in lieu of the computationally intensive multiplicative operations as required of a prior art mixer. Advantageously, the requisite computations in the inventive mixer can be easily handled by a conventional processor, which is much less expensive than the aforementioned specialized DSP. In addition, because of the simplicity of its operation, the inventive mixer can readily accommodate more attendees in a teleconference than the prior art mixer without overloading the processor.

### Brief Description of the Drawing

In the drawing,
Fig. 1 illustrates a communication arrangement for teleconferencing in accordance with the invention; and
Fig. 2 is a flow chart depicting a routine used in a mixer in the communication arrangement of Fig. 1 for generating mixed signal samples in accordance with the invention.

### Detailed Description

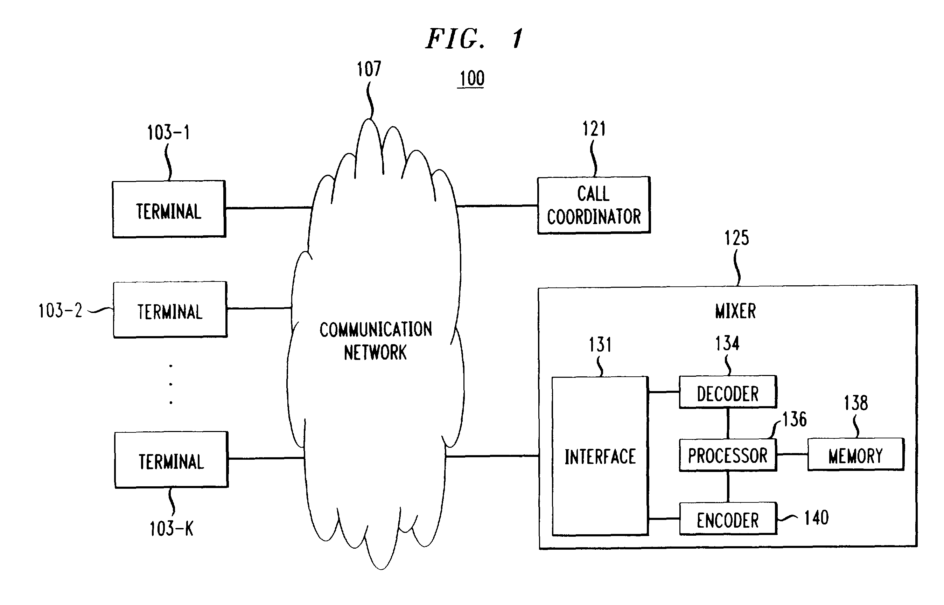

Fig. 1 illustrates communication arrangement 100 embodying the principles of the invention for providing teleconferencing capabilities. Using arrangement 100, users at terminals 103-1 through 103-K may conduct a teleconference, e.g., a videoconference or an audioconference, among themselves through communication network 107, where K is an integer greater than one. Terminals 103-1 through 103-K may be at different locations, and each may be a conventional multimedia terminal capable of communicating audio, video and/or text information. In this instance, communication network 107 employs the same transmission control protocol/Internet protocol (TCP/IP) as the Internet to transport information therethrough.

The invention is directed to audio communications in a teleconference which are central to an audioconference, and which constitute a principal part of a videoconference. In fact, an audioconference can be considered as an integral subpart of a videoconference. Without loss of generality, in this example, users at terminals 103-1 through 103-K utilizes arrangement 100 to conduct an audioconference among themselves. Thus, in this instance, some of the terminals may be conventional telephone equipment capable of communicating audio information only.

In a conventional manner, the audioconference is established by each terminal's transmitting, through a signaling channel in network 107, to call coordinator 121 information concerning (a) the terminal configuration including the coding scheme for encoding audio information therein, (b) an IP address identifying the terminal, and (c) a predetermined reference to the audioconference in question. Upon receiving such information from each terminal, coordinator 121 assigns a mixer, e.g., mixer 125, to serve the audio communication needs in the referenced audioconference. To that end, coordinator 121 also conveys above information (a) and (b) to mixer 125. Coordinator 121 then starts the audioconference by directing each participating terminal to transmit audio information during the audioconference to mixer 125 through a media channel in network 107. The audio information from each terminal may represent sound effects including utterances by its user in the audioconference. In any event, the audio information from each terminal is digitally encoded in accordance with its coding scheme, and represented by an audio signal for transmission to mixer 125.

During the audioconference, the users through the respective terminals are able to audio-communicate in a full duplex manner or, in other words, can talk freely and simultaneously to exchange information with one another. In prior art, to realize the audioconference, a mixer derives digital samples from the audio signals transmitted from the terminals. During each sample interval, based on the derived digital samples attributed to different users, the mixer computes for each user a mixed sample representative of the aggregate result of the sound effects by other users, in accordance with an averaging function. For example, the resulting mixed sample transmitted back to each user may represent a weighted average of the digital samples attributed to the other users, where the weight for each digital sample increases with the sample value. In general, by using the averaging function, the mixed sample for each user includes representations of all of the sound effects by other users in the audioconference.

In computing the mixed sample using the aforementioned averaging function, the prior art mixer in effect mixes energies of the digital samples attributed to different users. However, such an averaging function calls for multiplicative operations, the number of which increases with the number of users participating in the audio-conference. Because of these multiplicative operations, the computation required of the mixer is highly intensive for a typical audioconference. As such, a specialized digital signal processor (DSP) is usually employed to handle such a highly intensive computation in the mixer. Unfortunately, the specialized DSP also contributes to the undesirably high cost of the mixer.

We have recognized that typical human auditory faculties cannot distinguish the effect of successive mixed samples each resulting from mixing energies of audio samples attributed to different speakers during the corresponding sample interval, as in the prior art, from that of successive mixed samples each comprising the audio sample attributed to the loudest speaker during the corresponding sample interval, provided that the sample interval is short, e.g., less than 100 ms.

Thus, in accordance with the invention, during each sample interval which in this instance is much shorter than 100 ms, mixer 125 provides a mixed sample, which comprises the audio sample having the highest energy level attributed to the loudest user in the sample interval, to each user other than the loudest user. For the loudest user in the sample interval, mixer 125 provides to that user another mixed sample signal, which represents the audio sample having the next highest energy level attributed to the next loudest user, thereby preventing such a user from hearing an otherwise, undesirable echo of his/her own utterance. In effect, during each sample interval, mixer 125 in accordance with the invention "switches" to select the input audio sample having the highest energy level to become the mixed sample output to each user, as long as the highest energy level audio sample is not attributed to the user. For the one particular user to which the highest energy level audio sample is attributed, mixer 125 "switches" to select the input audio sample having the next highest energy level to become the mixed sample output to that particular user.

In performing the sample switching function, mixer 125 needs to carry out simple comparative operations in lieu of the computationally intensive multiplicative operations as required of a prior art mixer. Advantageously, the requisite computational capacity of mixer 125 can be easily met by a conventional processor, e.g., processor 136 therein, which is much less expensive than the aforementioned specialized DSP. In addition, because of the simplicity of the sample switching operation, mixer 125 can readily accommodate more users in a teleconference than the prior art mixer without overloading the processor.

The operation of mixer 125 in accordance with the invention will now be described. After receiving the audio signals representing audio information from terminals 103-1 through 103-K, interface 131 in mixer 125 in a well known manner derives K streams of digital samples corresponding to the respective received audio signals. Let's assume in this instance that at least two different coding schemes are used by terminals 103-1 through 103-K to encode the audio information therein. To effectively compare the energy levels represented by the samples, decoder 134 decodes the K streams of digital samples to the corresponding K streams of linear samples, e.g., non-compressed pulse code modulation (PCM) samples, according to the coding schemes used in the respective terminals which were communicated by coordinator 121 to mixer 125.

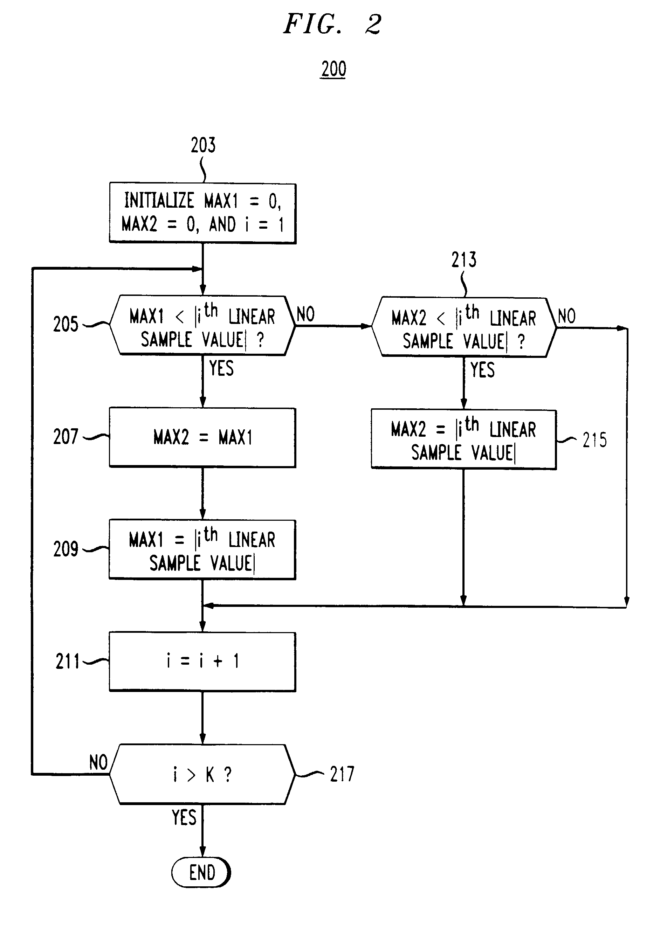

During each sample interval, processor 136 identifies, from the K linear samples from respective terminals 103-1 through 103-K, the linear samples having the highest and next highest energy levels or amplitudes max1 and max2, respectively, in accordance with routine 200 in Fig. 2. Specifically, instructed by routine 200 which is stored in memory 138, processor 136 initializes max1 and max2 to zero, and an index i to one, as indicated at step 203. Processor 136 at step 205 compares the value of max1 with the absolute value of i^{th} linear sample from terminal 103-i, 1 ≤ i ≤ K. If the maxl value is smaller than the i^{th} linear sample absolute value, routine 200 proceeds to step 207 where max2 is set to equal maxl. In addition, max1 is set to equal the i^{th} linear sample absolute value, as indicated at step 209. The index i is then incremented at step 211 by one.

Otherwise, if processor 136 at step 205 determines that the max1 value is greater than or equal to the i^{th} linear sample absolute value, routine 200 proceeds to step 213 where the value of max2 is compared with the i^{th} linear sample absolute value. If max2 is greater than or equal to the i^{th} linear sample absolute value, routine 200 returns to step 211 described before. Otherwise, if max2 is smaller than the i^{th} linear sample absolute value, routine 200 proceeds to step 215 where max2 is set to equal the i^{th} linear sample absolute value, and then returns to step 211.

After the index i is incremented at step 211, processor 136 at step 217 compares the value of i with K. If the value of i is smaller than or equal to K, routine 200 returns to step 205 described before. Otherwise, routine 200 comes to an end.

In accordance with the invention, during each sample interval, mixer 125 transmits a mixed sample having an amplitude max1 resulting from routine 200 to each terminal which did not contribute max1, and transmits another mixed sample having an amplitude max2 resulting from routine 200 to only the terminal which contributed maxl. Thus, during each sample interval, the mixed samples from mixer 125 to terminals 103-1 through 103-K include (K - 1) mixed samples having the amplitude maxl, and a mixed sample having the amplitude max2. These mixed samples are encoded by encoder 140 according to the coding schemes used by the respective terminals. The resulting digital samples are transmitted through interface 131 to the respective terminals identified by their IP addresses. Terminals 103-1 through 103-K then derive audio information from the received digital samples, respectively, thereby realizing the audioconference.

The foregoing merely illustrates the principles of the invention. It will thus be appreciated that those skilled in the art will be able to devise numerous other arrangements which embody the principles of the invention and are thus within its spirit and scope.

For example, in the disclosed embodiment, it is assumed that at least two different audio-coding schemes are used by terminals 103-1 through 103-K. Accordingly, the digital samples received from the respective terminals need to be decoded to the corresponding linear samples to effectively compare the energy levels represented thereby. In addition, the mixed samples comprising selected linear samples need to be encoded before transmission thereof back to the terminals. However, where only one coding scheme is used by the terminals, it will be appreciated that the energy comparison can be effectively achieved based on the values of the digital samples themselves as they are encoded by the same coding scheme. As a result, the transcoding, i.e., decoding of the digital samples to the linear samples followed by encoding of the selected linear samples, is advantageously obviated.

Moreover, in the disclosed embodiment, mixer 125 performs a switching function on a sample by sample basis. However, it will be appreciated that such a switching function may be performed on an ensemble by ensemble basis, where each ensemble contains multiple samples from the same terminal. In ensemble switching, mixer 125 needs to compare the energies of ensembles, as opposed to the energies of samples as in sample switching, from different terminals to generate the mixer output. As a result, the frequency of energy comparisons performed by mixer 125 in the ensemble switching is substantially reduced, with respect to that in the sample switching, thereby further simplifying the operation of mixer 125. The ensemble switching is particularly efficient if the length of the ensemble coincides with a coder frame which also comprises multiple samples, since the value, and thus the energy, of an ensemble whose length is not equal to that of the coder frame cannot be determined at any instant before the coder frame corresponding to the ensemble is decoded. However, it should be noted that the audio quality as perceived by the users decreases as the length of the ensemble increases. Specifically, as the length of the ensemble passes a certain limit, the users start to perceive a choppy audio effect attributed to the switching operation.

In addition, in the illustrative embodiment, the audio information from terminals 103-1 through 103-K may be transported through network 107 in the form of packets in accordance with the TCP/IP protocol. It will be appreciated that the size of such packets may vary from one terminal to another. Where the aforementioned ensemble switching is implemented, the size of an ensemble may assume the value of a common factor of the respective sizes of the audio information portions of the packets, up to that of the highest common factor (HCF) thereof.

Further, network 107 may employ one or more routers to direct the aforementioned packets containing audio information through the network, and such routers may be of different design.

Finally, communication arrangement 100 disclosed herein in a form in which various communication functions are performed by discrete functional blocks. However, any one or more of these functions could equally well be embodied in an arrangement in which the functions of any one or more of those blocks or indeed, all of the functions thereof, are realized, for example, by one or more appropriately programmed processors.

## Claims

1. Apparatus for processing a plurality of audio representations rcprcsenting sound effects from a plurality of locations, respectively, the plurality of audio representations having energy contents, the apparatus comprising:
a processor for identifying a first audio representation and a second audio representation from the plurality of audio representations based on levels of the energy contents thereof, the first audio representation representing a sound effect from a particular location; and
an interface for transmitting signals representing the first audio representation to the plurality of locations, except the particular location, and for transmitting a signal representing the second audio representation to the particular location.

2. Apparatus for processing audio signals originating from a plurality of terminals. the apparatus comprising:
an interface for deriving a plurality of audio representations from the audio signals originating from the terminals, respectively, the audio representations having values;
a processor for identifying a first audio representation and a second audio representation from the plurality of audio representations based on the values thereof, the first audio representation being derived from an audio signal originating from a particular terminal; and
an output for transmitting signals representing the first audio representation to the plurality of terminals, except the particular terminal. and for transmitting a signal representing the second audio representation to the particular terminal.

3. A system for conducting a teleconference comprising:
a controller for coordinating transmissions by a plurality of terminals of audio signals through a communication network. respectively, in the teleconference;
an interface for deriving audio representations from the respective audio signals, the audio representations having values;
a processor for identifying a first audio representation and a second audio representation from the plurality of audio representations based on the values thereof, the first audio representation being derived from the audio signal transmitted by a particular terminal; and
an output for transmitting signals representing the first audio representation to the plurality of terminals, except the particular terminal, and for transmitting a signal representing the second audio representation to the particular terminal.

4. A method for processing a plurality of audio representations representing sound effects from a plurality of locations, respectively, the plurality of audio representations having energy contents, the method comprising:
identifying a first audio representation and a second audio representation from the plurality of audio representations based on levels of the energy contents thereof, the first audio representation representing a sound effect from a particular location;
transmitting signals representing the first audio representation to the plurality of locations, except the particular location; and
transmitting a signal representing the second audio representation to the particular location.

5. A method for processing audio signals originating from a plurality of terminals, the method comprising:
deriving a plurality of audio representations from the audio signals originating from the terminals, respectively, the audio representations having values;
identifying a first audio representation and a second audio representation from the plurality of audio representations based on the values thereof, the first audio representation being derived from an audio signal originating from a particular terminal;
transmitting signals representing the first audio representation to the plurality of terminals, except the particular terminal; and
transmitting a signal representing the second audio representation to the particular terminal.

6. A method for use in a system for conducting a teleconference, the system including a plurality of terminals and a communication network. the method comprising:
coordinating transmissions by the plurality of terminals of audio signals through the communication network, respectively, in the teleconference;
deriving audio representations from the respective audio signals, the audio representations having values;
identifying a first audio representation and a second audio representation from the plurality of audio representations based on the values thereof, the first audio representation being derived from the audio signal transmitted by a particular terminal;
transmitting signals representing the first audio representation to the plurality of terminals. except the particular terminal; and
transmitting a signal representing the second audio representation to the particular terminal.

7. The apparatus of claim 1 or 2, or the system of claim 3, or the method of claim 4 or 5 or 6, wherein each audio representation includes one or more audio samples.

8. The apparatus of claim 1 or 2, or the system of claim 3, or the method of claim 4 or 5. or 6, wherein the first audio representation has the highest absolute value or the highest level of energy content of all of the audio representations.

9. The apparatus, system or method of claim 8, wherein the second audio representation has the next highest absolute value or level of energy content.

10. The apparatus of claim 1, or 2, or the system of claim 3, or the method of claim 4. or 5 or 6, wherein at least one of the audio representations is encoded.

11. The apparatus of claim I, or the apparatus of claim 2, or the method of claim 4 or 5. or 6, wherein the audio signals represent sound effects from locations where the terminals are situated, wherein the sound effects include utterances.

12. The apparatus of claim 1, or 2, wherein the processor includes the interface, and/or the output.

13. The system of claim 3, or the method of claim 6, wherein the teleconference includes a videoconference, and/or an audio conference.

14. The system of claim 3, wherein at least one of the terminals includes a multimedia terminal, and/or telephone equipment, and/or wherein the communications network includes means for connccting to at least part of the Internet.
